# EUROPEAN PATENT SPECIFICATION

(11) **EP 2 523 285 B1**
(45) Date of publication and mention of the grant of the patent: **28.09.2016**
(21) Application number: 11731805.5
(22) Date of filing: 05.01.2011
(51) Int. Cl.: H02G 11/00, B60N 2/44, B60R 16/02, H02G 3/04

(54) **WIRE-HARNESS WIRING STRUCTURE**
KABELRAHMEN-VERKABELUNGSSTRUKTUR
STRUCTURE DE CÂBLAGE D'UN FAISCEAU DE FILS

(30) Priority: 06.01.2010 JP 2010001291
(43) Date of publication of application: 14.11.2012
(73) Proprietor: Yazaki Corporation, Minato-ku Tokyo 108-8333 (JP)
(72) Inventor: YAMAGUCHI Atsuyoshi, Shizuoka (JP); SHOJI Kazuhiro, Shizuoka (JP)
(74) Representative: Grünecker Patent- und Rechtsanwälte PartG mbB
(86) International application number: PCT/JP2011/050067
(87) International publication number: WO 2011/083807

(56) References cited:
- WO-A1-2009/157517
- FR-A1- 2 790 337
- JP-A- 2001 171 443
- JP-A- 2006 327 240

## Description

### Technical Field

The present invention relates to a wire harness installing structure, and more particularly to an improvement for saving a space of an installation area while improving an installing workability.

### Background Art

A vehicle seat includes a power seat device that adjusts the position of a seat cushion in a forward-backward direction and in a vertical direction in conformity to the posture of a passenger or reclines a seat back, and an air back unit device that is developed between the passenger and a side door. A wire harness is installed in the vehicle seat on which the above device is mounted for feeding power to electric parts.

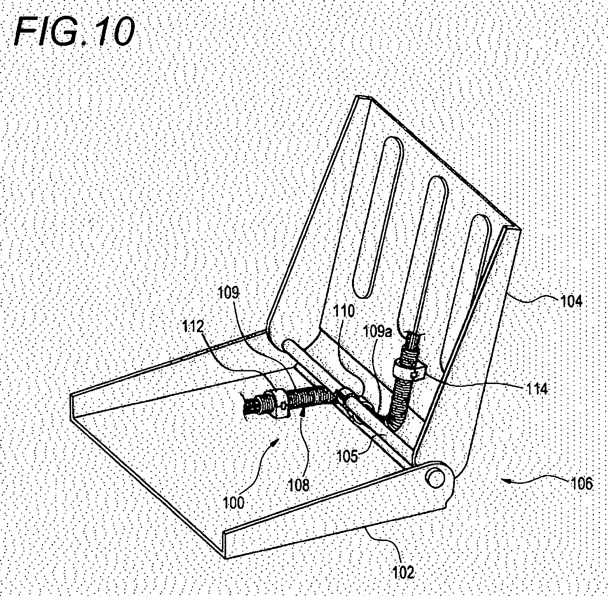

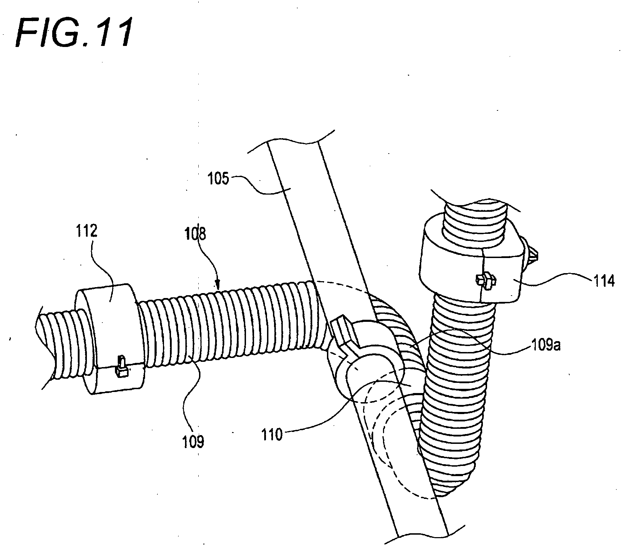

FIGS. 10 and 11 illustrate a conventional example of the wire harness installing structure in the vehicle seat. As illustrated in FIGS. 10 and 11, in a wire harness installing structure 100, a wire harness 108 is installed to a seat back 104 from a lower side of a seat cushion within a vehicle seat 106 which has the seat back 104 is provided on a side frame 102 so as to be reclined with a horizontal rotating shaft 105. The seat cushion (not shown) is provided on the side frame 102.

A wire harness 108 is covered and protected with a corrugated tube 109 on an installing path. In the wire harness 108, an intermediate part 109a of the wire harness 108 is installed along the rotating shaft 105 in parallel, the intermediate part 109a is fixed to the rotating shaft 105 by a clamp 110, portions continuous to both sides of the intermediate part 109a are fixed to the seat cushion and the seat back 104 by other clamps 112 and 114 respectively.
The document FR2790337 discloses a prior art wire harness installing structure. In this wire harness installing structure a wire harness that bundles a plurality of electric wires into a bundle state is installed between two structures across a movable linking part that movably couples first and second structures, wherein a movable part installing section of the wire harness arranged in a predetermined length interval across the movable linking part includes:
a non bundled part in which the electric wires are movable and bendable respectively without being bundled; and
a stretchable protective member which covers an outer periphery of the non bundled part so as not to restrict an absorption of the surplus length of the electric wires.

The installation structure of the wire harness of this type is also disclosed in the following Patent Document 1.

### Prior Art Document

### Patent Document

Patent Document 1: JP-A-2006-304538

### Summary of the Invention

### Problem to be Solved by the Invention

Incidentally, with an improvement in functions of the vehicle seat, there is a tendency that the number of electric parts increases, and even in the wire harness used for feeding power, the number of electric wires to be bundled is increased, as a result, the diameter of bundle of the electric wires is also increased. There is a difficulty in bending a thick bundle of the wire harness so that the wire harness is fitted into a narrow space such as the interior of the vehicle seat, resulting in such a problem that the workability is low.

Also, since there is the difficulty in bending the thick bundle of the wire harness, the bend radius of the wire harness is increased, resulting in such a problem that a wide installation space is required.

In order to eliminate the above problem, an object of the present invention is to provide a wire harness installing structure that can improve an installing workability of the wire harness, and save a space of a installation area.

### Means for Solving the Problem

The above object of the present invention is achieved by the following configuration.
(1) A wire harness installing structure in which a wire harness that bundles a plurality of electric wires into a bundle state is installed between two structures across a movable linking part that movably couples first and second structures, wherein a movable part installing section of the wire harness arranged in a predetermined length interval across the movable linking part includes: an non bundled part in which the electric wires are movable respectively without being bundled; and a stretchable protective member which covers an outer periphery of the non bundled part so as not to restrict a movable state of the electric wires.
(2) The wire harness installing structure according to the above (1), further comprising: a first fixing part that fixes one end of the movable part installing section to the first structure; and a second fixing part that fixes the other end of the movable part installing section to the second structure. The first fixing part and the second fixing part are arranged so as to set to be displaced in a direction orthogonal to a relative movement direction of the first fixing part and the second fixing part due to a mutual movement of the structures.
(3) The wire harness installing structure according to the above (1) or (2), wherein the first structure is a seat bottom structure of a vehicle reclining seat, and the second structure is a seat back structure.

According to the configuration of the above (1), the movable part installing section extending across the movable linking part has a high flexibility because the electric wires are not mutually bundled by a protective sheath or a tape, and the respective electric wires are freely movable in the radial direction. Accordingly, even if the bundle of electric wires of the wire harness becomes thicker, the wire harness can be easily bent at the movable part installing section. Therefore, the installing workability can be improved.

Also, since the wire harness can be easily bent at the movable part installing section, the bend radius does not become larger, and the installation area can be saved in space.

Also, the wire harness is moved and widened in one direction of the radial directions so as to be flattened, and the wire harness can be bent at the movable part installing section. Therefore, no wide space is required for changing the installing direction, and the installation area can be saved in space.

Further, the stretchable protective member provided on the movable part installing section appropriately suppresses the movement of the respective electric wires to prevent the outer diameter of the movable part installing section from being casually enlarged during the bending operation. Therefore, the stretchable protective member contributes to the space saving of the installation area.

Also, when the two structures mutually move through the movable linking part, the bend state of the moveable part installing section 25 is changed with the mutually moving operation of the two structures. As a result, the mutually moving operation of the two structures can be flexibly permitted.

Also, because the outer periphery of the respective electric wires in the movable part installing section is covered with the stretchable protective member, the electric wires moving in a direction orthogonal to an extending direction of the electric wires when the movable part installing section is bent does not directly contact the peripheral structure so that the wire harness can be prevented from being damaged.

According to the configuration of the above (2), when the two structures mutually move, the movable part installing section deals with the relative movement by both of the simple bend and twist so that the surplus length absorption performance of the movable part installing section can be improved. Accordingly, the allowance performance of the mutual movement of the two structures can be improved.

According to the configuration of the above (3), the installing workability of the wire harness in the vehicle reclining seat can be improved, and also the installation area in the vehicle reclining seat can be saved in space.

### Brief Description of the Drawings

[FIG. 1] FIG. 1 is a perspective view of a wire harness installing structure in a vehicle seat according to a first embodiment of the present invention.
[FIG. 2] FIG. 2 is a perspective view of the wire harness installing structure viewed from obliquely backward on the right of the vehicle seat illustrated in FIG. 1.
[FIG. 3] FIG. 3 is a perspective view of the wire harness installing structure viewed from obliquely backward on the left of the vehicle seat illustrated in FIG. 1.
[FIG. 4] FIG. 4 is a side view of a fixture used in a second fixing part in the wire harness installing structure illustrated in FIG. 3.
[FIG. 5] FIG. 5, is a partially broken perspective view illustrating an outline configuration of a main part of the wire harness installing structure illustrated in FIG. 1.
[FIG. 6] FIG. 6 is a diagram illustrating a bend state of a movable part installing section of the wire harness in a state where a seat back structure is reclined forward in the wire harness installing structure according to the first embodiment, in which FIG. 6(a) is a side view, FIG. 6(b) is a perspective view from obliquely forward of the vehicle seat, and FIG. 6(c) is a perspective view from obliquely backward.
[FIG. 7] FIG. 7 is a diagram illustrating the bend state of the movable part installing section of the wire harness in a state where the seat back structure is reclined backward in the wire harness installing structure according to the first embodiment, in which FIG. 7(a) is a side view, FIG. 7(b) is a perspective view from obliquely forward of the vehicle seat, and FIG. 7(c) is a perspective view from obliquely backward.
[FIG. 8] FIG. 8 is a diagram illustrating a bend state of a movable part installing section of the wire harness in a state where a seat back structure is reclined forward in a wire harness installing structure according to a second embodiment of the present invention, in which FIG. 8(a) is a side view, FIG. 8(b) is a perspective view from obliquely forward of the vehicle seat, and FIG. 8(c) is a perspective view from obliquely backward.
[FIG. 9] FIG. 9 is a diagram illustrating the bend state of the movable part installing section of the wire harness in a state where a seat back structure is reclined backward in the wire harness installing structure according to the second embodiment of the present invention, in which FIG. 9(a) is a side view, FIG. 9(b) is a perspective view from obliquely forward of the vehicle seat, and FIG. 9(c) is a perspective view from obliquely backward.
[FIG. 10] FIG. 10 is an installing diagram of a conventional wire harness.
[FIG. 11] FIG. 11 is an enlarged diagram of a main part of FIG. 10. Modes for Carrying Out the Invention

Hereinafter, a description will be given in detail of a wire harness installing structure according to preferred embodiments of the present invention with reference to the drawings.

### [First Embodiment]

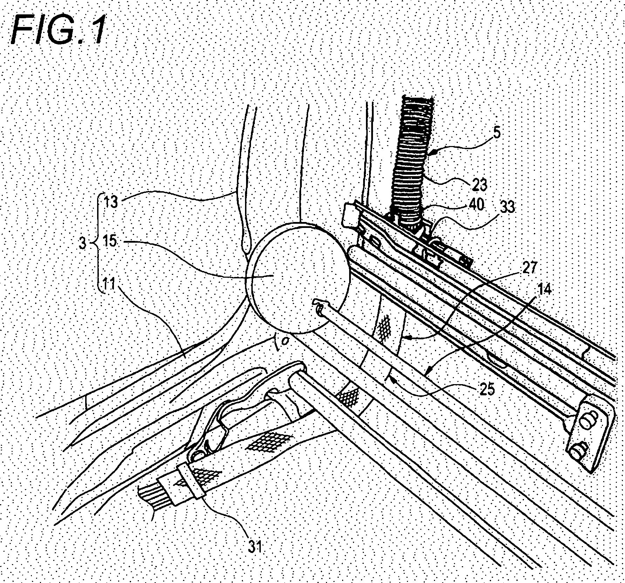

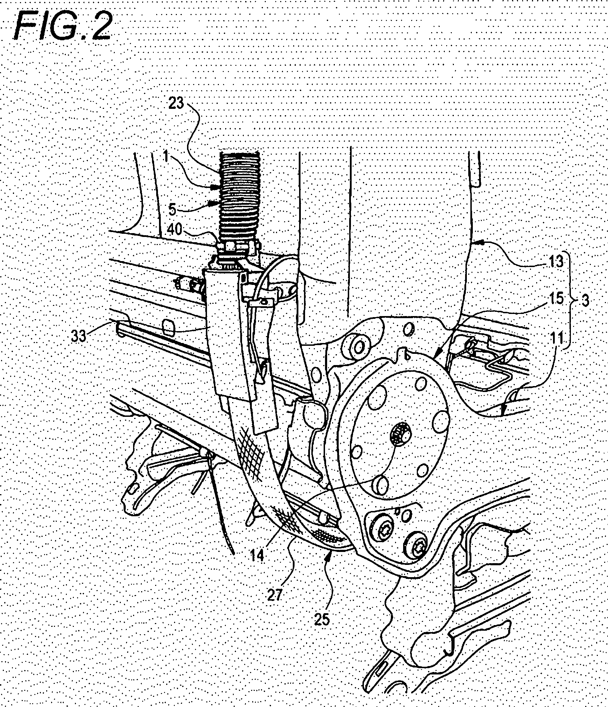

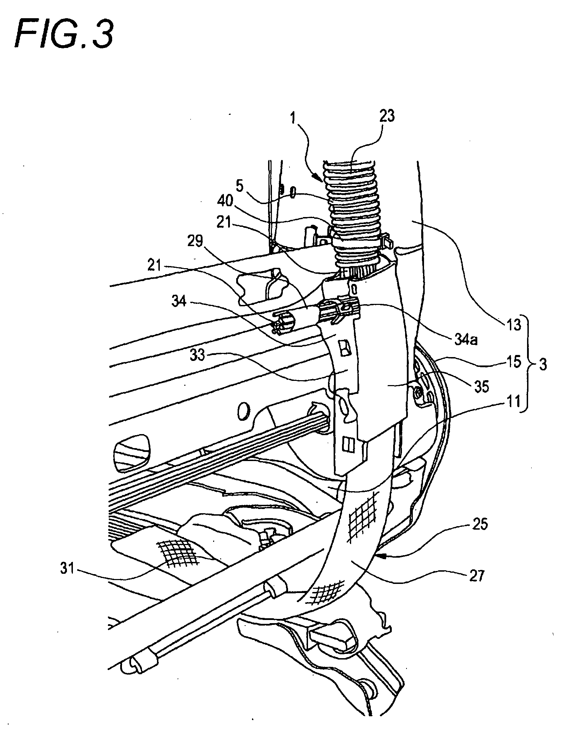

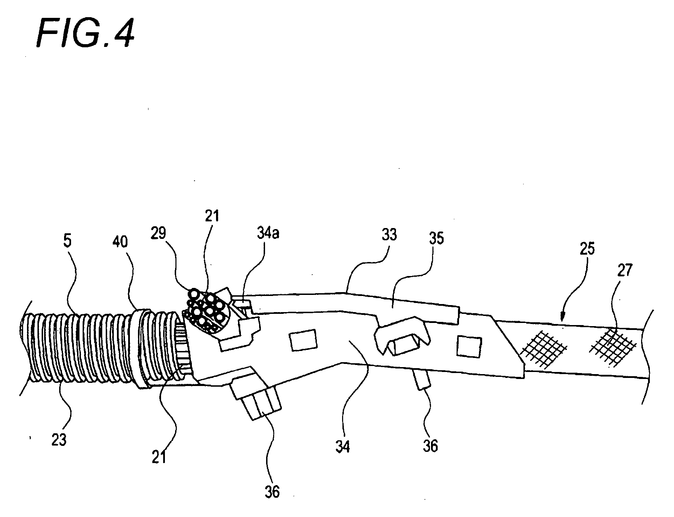

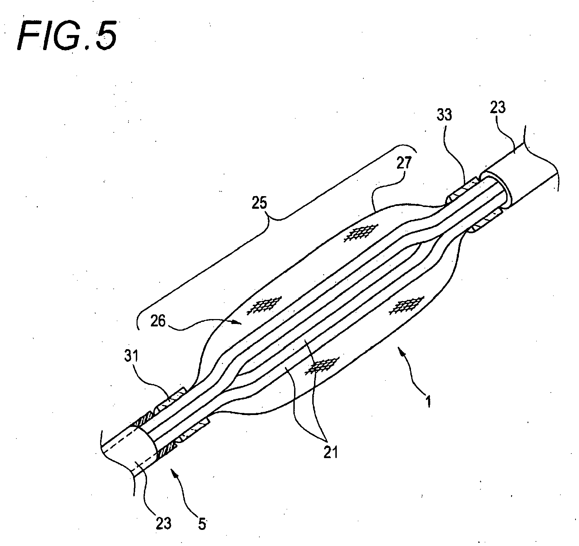

FIG. 1 is a perspective view of a wire harness installing structure in a vehicle seat which is a first embodiment of a wire harness installing structure according to the present invention. FIG. 2 is a perspective view of the wire harness installing structure viewed from obliquely backward on the right of the vehicle seat illustrated in FIG. 1. FIG. 3 is a perspective view of the wire harness installing structure viewed from obliquely backward on the left of the vehicle seat illustrated in FIG. 1. FIG. 4 is a side view of a fixture used in a second fixing part in the wire harness installing structure illustrated in FIG. 3. FIG. 5 is a partially broken perspective view illustrating an outline configuration of a main part of the wire harness installing structure illustrated in FIG. 1.

In a wire harness installing structure 1 according to the first embodiment, as illustrated in FIGS. 1 to 3, a wire harness 5 is installed in a vehicle reclining seat 3.

Referring to FIGS. 1 to 3, in the reclining seat 3, a lower end of a seat back structure 13 serving as a second structure is movably coupled to a rear end of a seat bottom structure 11 serving as a first structure. Specifically, the seat bottom structure 11 is disposed substantially in horizontal direction. Also, the seat back structure 13 extends upward from the rear end of the seat bottom structure 11. The rear end of the seat bottom structure 11 and the lower end of the seat back structure 13 are rotatably coupled to each other by a movable linking part 15 that couples those structures to each other by a rotating shaft 14.

The seat back structure 13 is coupled to the seat bottom structure 11 by the movable linking part 15 so as to adjust the inclination angle thereof.

The wire harness 5 basically has a structure in which a plurality of electric wires 21 and a cylindrical protective sheath 23 that holds the electric wires 21 in a bundle state are provided in a range other than the movable part installing section that will be described later as illustrated in FIG. 5.

In this embodiment, the protective sheath 23 is formed of a corrugated tube.

The wire harness installing structure 1 according to this embodiment installs the wire harness 5 between two structures (the seat bottom structure 11 and the seat back structure 13) across the movable linking part 15.

In the case of the wire harness installing structure 1 according to this embodiment, as illustrated in FIG. 5, in the wire harness 5, a movable part installing section 25 arranged in a predetermined length interval across the movable linking part 15 forms an non bundled part 26 in which the protective sheath 23 is peeled off (removed), and the respective electric wires 21 inside the protective sheath 23 are discretely movable. Further, the movable part installing section 25 includes a stretchable protective member 27 that covers an outer periphery of the non bundled part 26 so as not to restrict the movability of the respective electric wires 21.

Epexegetically, the non bundled part 26 is in a state where the plurality of electric wires 21 are not bundled, and the electric wires are mutually freely movable, so that the non bundled part 26 can easily get into a flat shape, and can be easily bent.

In this embodiment, the stretchable protective member 27 is formed of a meshed resin tube having a stretch property.

In this embodiment, there are provided a first fixing part 31 that fixes one end of the movable part installing section 25 to the seat bottom structure 11, and a second fixing part 33 that fixes the other end of the movable part installing section 25 to the seat back structure 13.

In this embodiment, as illustrated in FIG. 1, the first fixing part 31 is a bundling band that bundles the wire harness 5 into the seat bottom structure 11.

Also, as illustrated in FIGS. 2 to 4, the second fixing part 33 is a resin protector including a protector main body 34 having a U-shaped section into which the other end of the movable part installing section 25 can be inserted, and a cover 35 that openably covers an opened part of the protector main body 34. As illustrated in FIGS. 3 and 4, the protector main body 34 has a branch hole 34a that guides a part of the accommodated electric wires 21 laterally as a branch harness 29. The wire harness 5 is fixed to the second fixing part 33 by a bundling band 40.

Further, as illustrated in FIG. 4, the protector main body 34 has an elastic engagement projection 36 that is engaged with a fitting hole provided in the seat back structure 13, and fixed to the seat back structure 13.

The second fixing part 33 is fixed to the seat back structure 13 by engagement with the elastic engagement projection 36 or the bundle by the bundling band 40.

Further, in this embodiment, the arrangement of the first fixing part 31 and the arrangement of the second fixing part 33 are set to match each other in a direction (in this embodiment, an axial direction of the rotating shaft 14 which is a width direction of the reclining seat 3) orthogonal to a relative movement direction (in this embodiment, a forward-backward direction of the vehicle) of the first fixing part 31 and the second fixing part 33 due to the mutual movability of the structures.

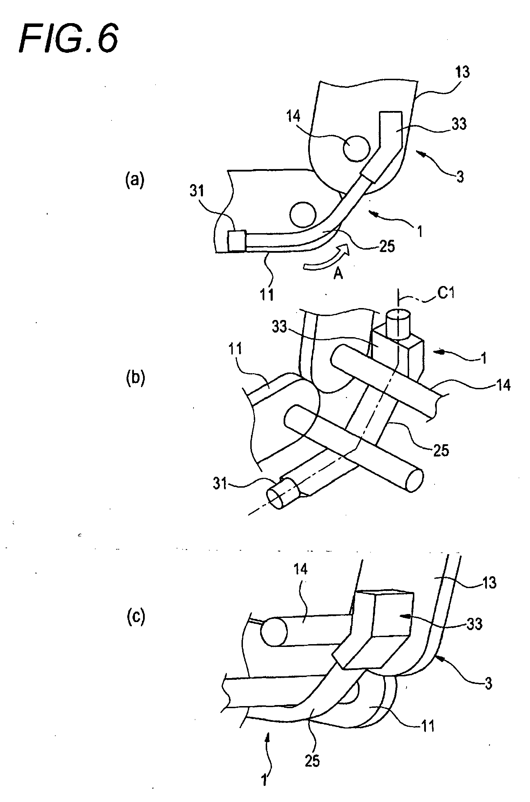

This means that a central axis C1 drawn between the first fixing part 31 and the second fixing part 33 become linear when viewed from a front or a top of the vehicle as illustrated in FIG. 6(b) that will be described later.

Also, since a portion in the electric wires 21 between the first fixing part 31 and the second fixing part 33 is not bundled so that the wires are mutually freely movable, the electric wires 21 can easily get into a flat shape, and can be easily bent.

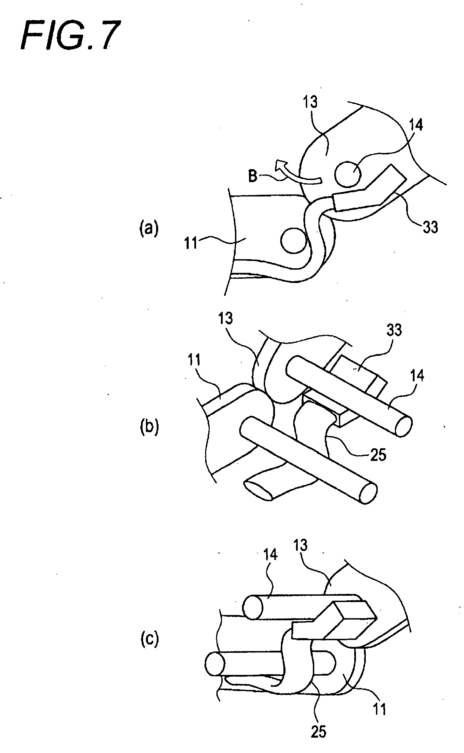

Subsequently, a description will be given of the operation of bending the movable part installing section 25 when the seat back structure 13 is reclined with reference to FIGS. 6 and 7.

FIG. 6 is a diagram illustrating a bend state of the movable part installing section of the wire harness in a state where the seat back structure is reclined forward in the wire harness installing structure according to the first embodiment, in which FIG. 6(a) is a side view, FIG. 6(b) is a perspective view from obliquely forward of the vehicle seat, and FIG. 6(c) is a perspective view from obliquely backward. FIG. 7 is a diagram illustrating the bend state of the movable part installing section of the wire harness in a state where the seat back structure is reclined backward in the wire harness installing structure according to the first embodiment, in which FIG. 7(a) is a side view, FIG. 7(b) is a perspective view from obliquely forward of the vehicle seat, and FIG..7(c) is a perspective view from obliquely backward.

The seat back structure 13 can be reclined forward from the state illustrated in FIGS. 6(a) to 6(c), and the wire harness is also set to a sufficient length corresponding to the reclined state. Accordingly, in the state of FIGS. 6(a) to 6(c), a surplus length of the wire harness occurs as compared with a state in which the seat back structure 13 is most forward inclined. However, the wire harness is flatly widened in the width direction of the vehicle in the movable part installing section so that the surplus length is absorbed.

As illustrated in FIGS. 6(a) to 6(c), when the seat back structure 13 is forward reclined, a range of the movable part installing section 25 which is located below the rotating shaft 14, is pulled in a direction indicated by an arrow A illustrated in FIG. 6(a), and bent in a convex curved shape backward from a rear end of the seat bottom structure 11 in association with the forward rotation of the seat back structure 13 with the rotating shaft 14 as a rotation fulcrum. Because the movable part installing section 25 is not equipped with the protective sheath 23, but has a high flexibility, the movable part installing section 25 can be easily bent following a displacement of the seat back structure 13.

As illustrated in FIGS. 7(a) to 7(c), when the seat back structure 13 is reclined backward, when the seat back structure 13 is reclined backward, a range of the movable part installing section 25 which is located below the rotating shaft 14, is pushed in a direction indicated by an arrow B illustrated in FIG. 7(a), and bent in a convex curved shape forward from the rear end of the seat bottom structure 11 in association with the backward rotation of the seat back structure 13 with the rotating shaft 14 as the rotation fulcrum. Even in this case, because the movable part installing section 25 has high flexibility, the movable part installing section 25 can be easily bent following the displacement of the seat back structure 13.

In the wire harness installing structure 1 according to the first embodiment described above, the movable part installing section 25 extending across the movable linking part 15 has high flexibility because the electric wires 21 are not mutually bundled by the protective sheath 23, and the respective electric wires 21 are freely movable. Accordingly, even if the bundle of electric wires 21 configuring the wire harness 5 is thick, since the movable part installing section 25 can be easily bent, the installing workability of the wire harness 5 to the reclining seat 3 can be improved.

Also, since the wire harness 5 can be easily bent at the movable part installing section 25, the bend radius is not large, and the installation area under the reclining seat 3 can be saved in space.

Also, since the wire harness 5 can be bent at the movable part installing section 25, no wide space is required for changing the installing direction, and the installation area under the reclining seat 3 can be saved in space.

Further, the stretchable protective member 27 equipped in the movable part installing section 25 appropriately suppresses the motion of the respective electric wires 21, and prevents the outer diameter of the movable part installing section 25 from being casually enlarged during the bending operation. Therefore, the stretchable protective member 27 contributes to the space saving of the installation area.

Also, when the two structures 11 and 13 mutually move through the movable linking part 15, the bend state of the movable part installing section 25 is changed with the mutually moving operation of the two structures 11 and 13. As a result, the mutually moving operation of the two structures 11 and 13 can be flexibly permitted.

Also, because the outer periphery of the respective electric wires 21 in the movable part installing section 25 is covered with the stretchable protective member 27, the electric wires 21 moving in a direction orthogonal to an extending direction of the electric wires 21 when the movable part installing section 25 is bent does not directly contact the structure around the reclining seat 3 so that the wire harness 5 can be prevented from being damaged.

### [Second Embodiment]

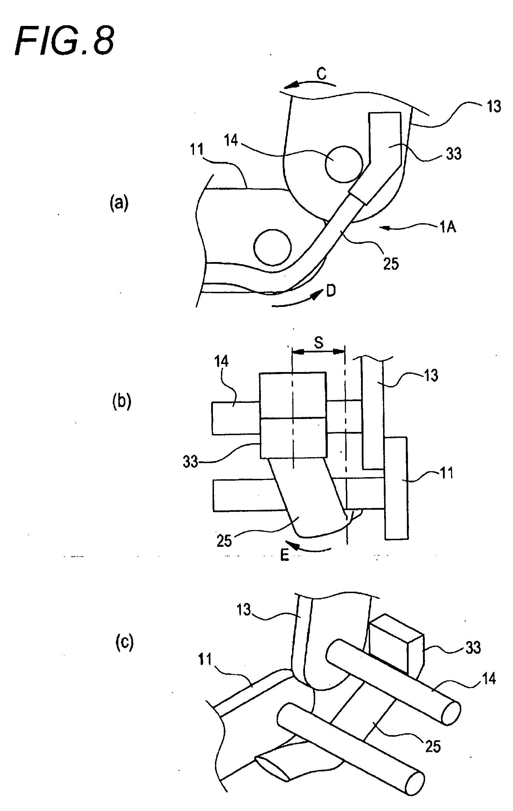

FIG. 8 is a diagram illustrating a bend state of a movable part installing section of the wire harness in a state where a seat back structure is reclined forward in a wire harness installing structure according to a second embodiment of the present invention, in which FIG. 8(a) is a side view, FIG. 8(b) is a perspective view from obliquely forward of the vehicle seat, and FIG. 8(c) is a perspective view from obliquely backward.

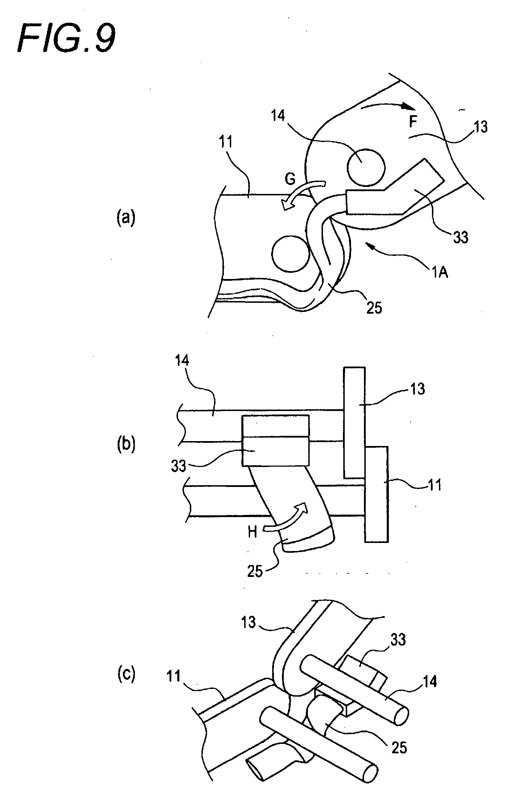

Also, FIG. 9 is a diagram illustrating the bend state of the movable part installing section of the wire harness in a state where a seat back structure is reclined backward in the wire harness installing structure according to the second embodiment of the present invention, in which FIG. 9(a) is a side view, FIG. 9(b) is a perspective view from obliquely forward of the vehicle seat, and FIG. 9(c) is a perspective view from obliquely backward.

A wire harness installing structure 1A according to the second embodiment improves a part of the wire harness installing structure 1 described in the first embodiment.

The improvement resides in that, as illustrated in FIG. 8(b), the first fixing part 31 and the second fixing part 33 are displaced by an appropriate distance S in a direction (a width direction of the reclining seat 3) orthogonal to the relative moving direction (forward-backward direction of the vehicle) of the first fixing part 31 and the second fixing part 33 due to the mutual movability of the structures.

In the wire harness installing structure 1A according to the seconde embodiment, as illustrated in FIG. 8(b), configurations other than the configuration in which the first fixing part 31 and the second fixing part 33 are displaced by the distance S in the width direction of the reclining seat 3 may be common to those in the first embodiment, and the common configurations are denoted by the same reference numerals, and their description will be omitted.

In the wire harness installing structure 1A according to the second embodiment, as illustrated in FIGS. 8(a) to 8(c), when the seat back structure 13 is forward reclined, a range of the movable part installing section 25 which is located below the rotating shaft 14, is pulled in a direction indicated by an arrow D illustrated in FIG. 8(a), and twisted in a direction indicated by an arrow E of FIG. 8(b), so as to be bent in a convex curved shape backward from a rear end of the seat bottom structure 11 in association with the forward rotation (a direction indicated by an arrow C in FIG. 8(a)) of the seat back structure 13 with the rotating shaft 14 as a rotation fulcrum. Because the movable part installing section 25 is not equipped with the protective sheath 23, and high in flexibility, the movable part installing section 25 can be easily bent following a displacement of the seat back structure 13. Also, because the bent part is twisted, and the surplus length can be absorbed, the movable part installing section 25 can be compactly bent.

In the wire harness installing structure 1A according to the second embodiment, as illustrated in FIGS. 9(a) to 9(c), when the seat back structure 13 is backward reclined, a range of the movable part installing section 25 which is located below the rotating shaft 14, is pushed in a direction indicated by an arrow G illustrated in FIG. 9(a), and twisted in a direction indicated by an arrow H of FIG. 9(b), so as to be bent in a convex curved shape forward from the rear end of the seat bottom structure 11 in association with the backward rotation (a direction indicated by an arrow F in FIG. 9(a)) of the seat back structure 13 with the rotating shaft 14 as a rotation fulcrum. Even in this case, because the bent part is twisted, and the surplus length can be absorbed, the movable part installing section 25 can be compactly bent. Also, because the movable part. installing section 25 is high in flexibility, the movable part installing section 25 can be easily bent following the displacement of the seat back structure 13.

In the wire harness installing structure 1A according to the second embodiment described above, the following effects can be obtained in addition to the effects of the first embodiment.

That is, when the two structures 11 and 13 mutually move, the movable part installing section 25 deals with the relative movement by both of the simple bend and twist so that the surplus length absorption performance of the movable part installing section 25 can be improved. Accordingly, the allowance performance of the mutual movement of the two structures can be improved.

The present invention is not limited to the above-mentioned embodiments, but may be appropriately freely deformed and improved. In addition, the materials, shapes, dimensions, numerical values, modes, quantities, and locations of the respective components in the above-mentioned embodiments are arbitrary and not restricted if they can achieve the present invention.

For example, in the wire harness installing structure according to the present invention, an object to be installed is not limited to the vehicle reclining seat, but can be applied to various equipment and devices in which two structures are relatively movably coupled to each other by a movable linking part.

Also, the movable mode using the movable linking part is not also limited to the rotating structure described in the above embodiments. The movable mode can be also applied to a mechanism in which the movable linking part slidably couples two structures to each other, and the slide is permitted by bending the wire harness.

Also, the stretchable protective member 27 is not limited to the meshed resin tube described in the above embodiments, but a sheet or tape having the stretch property may be winded to the degree that does not regulate the movement of the electric wires.

According to the wire harness installing structure of the present invention, since the movable part installing section partially formed in the wire harness can be bent, twisted, or folded with a small radius to be installed, the installing workability can be improved. Also, when the movable part installing section is bent, the bend radius is not increased, and the movable part installing section can be folded and installed. Therefore, the installation area can be saved in space.

### Description of Reference Numeral

- 1,: wire harness installing structure
- 1A,: wire harness installing structure
- 3,: reclining seat
- 5,: wire harness
- 11,: seat bottom structure (first structure)
- 13,: seat back structure (second structure)
- 14,: rotating shaft
- 15,: movable linking part
- 21,: electric wire
- 23,: protective sheath
- 25,: movable part installing section
- 26,: non bundled part
- 27,: stretchable protective member
- 31,: first fixing part
- 33,: second fixing part

## Claims

1. A wire harness installing structure (1) in which a wire harness (5) that bundles, a plurality of electric wires (21) into a bundle state is installed between two structures (11,13) across a movable linking part (15) that rotatably movably copies first and second structures (11,13), wherein
a movable part installing section (25) of the wire harness arranged in a predetermined length interval across the movable linking part (15) includes:
a non bundled part (26) in which the electric wires (21) are movable and bendable respectively without being bundled; and
a stretchable protective member (27) which covers an outer periphery of the non bundled part (26) so as not to restrict an absorption of the surplus length of the electric wires (21) by flatly widening the electric wires into a flat shape.

2. The wire harness installing structure (1) according to claim 1, further comprising:
a first fixing part (31) that fixes one end of the movable part installing section to the first structure (11); and
a second fixing part (33) that fixes the other end of the movable part installing section to the second structure (13).
wherein the first fixing part (31) and the second fixing part (33) are arranged so as to set to be displaced in a direction orthogonal to a relative movement direction of the first fixing part and the second fixing part due to a mutual movement of the structures

3. The wire harness installing structure according to claim 1 or 2, wherein the first structure (11) is a seat bottom structure of a vehicle reclining seat, and the second structure (13) is a seat back structure.

## Patentansprüche

1. Eine Kabelstranginstallationsstruktur (1) bei der ein Kabelstrang (5), der eine Vielzahl von elektrischen Drähten (21) in einen gebündelten Zustand bündelt, zwischen zwei Strukturen (11, 13) quer zu einem bewegbaren Verbindungsteil (15) installiert wird, das drehbewegbar erste und zweite Strukturen (11, 13) verbindet, wobei
ein Bewegteilinstallationsabschnitt (25) des Kabelstrangs, der in einem vorbestimmten Längenintervall quer zu dem bewegbaren Verbindungsteil (15) angeordnet ist, aufweist:
ein nicht gebündelten Teil (26) bei dem die elektrischen Drähte (21) bewegbar und entsprechend biegbar sind, ohne gebündelt zu sein, und
ein dehnbares Schutzglied (27), das ein Äußeres des nicht gebündelten Teils (26) abdeckt, um nicht eine Absorption der überschüssigen Länge der elektrischen Drähte (21) durch flaches Weiten der elektrischen Drähte in eine flache Gestalt einzuschränken.

2. Die Kabelstranginstallationsstruktur (1) gemäß Anspruch 1, weiter aufweisend:
einen ersten Fixierteil (31), der ein Ende des Bewegteilinstallationsabschnitts an der ersten Struktur (11) fixiert, und
einen zweiten Fixierteil (33), der das andere Ende des Bewegteilinstallationsabschnitts mit der zweiten Struktur (13) fixiert, wobei das erste Fixierteil (31) und das zweite Fixierteil (33) so angeordnet sind, um in einer Richtung rechtwinkelig zu einer relativen Bewegungsrichtung des ersten Fixierteils und des zweiten Fixierteils, wegen einer gemeinsamen Bewegung der Strukturen, verschoben zu werden.

3. Die Kabelstranginstallationsstruktur gemäß Anspruch 1 oder 2, wobei die erste Struktur (11) eine Sitzbodenstruktur eines Fahrzeuganlehnsitzes ist, und die zweite Struktur (13) eine Sitzrückenlehnstruktur ist.

## Revendications

1. Structure d'installation d'un faisceau de fils (1) dans laquelle un faisceau de fils (5) qui regroupe une pluralité de fils électriques (21) sous forme de faisceau est installé entre deux structures (11, 13) en enjambant une partie de liaison mobile (15) qui couple la première et la seconde structure de manière mobile et rotative, où une section d'installation de la partie mobile (25) du faisceau de fils agencée sur un intervalle de longueur prédéterminé de la partie de liaison mobile (15) inclut :
une partie non formée en faisceau (26) dans laquelle les fils électriques (21) sont mobiles et pliables respectivement sans être regroupés ; et
un élément de protection étirable (27) qui couvre une périphérie externe de la partie non formée en faisceau (26) de manière à ne pas restreindre une absorption de la longueur superflue des fils électriques (21) en élargissant platement les fils électriques pour qu'ils prennent une forme plate.

2. Structure d'installation d'un faisceau de fils (1) selon la revendication 1, comprenant en outre :
une première partie de fixation (31) qui fixe une extrémité de la section d'installation de la partie mobile à la première structure (11) ; et
une seconde partie de fixation (33) qui fixe l'autre extrémité de la section d'installation de la partie mobile à la seconde structure (13),
où la première partie de fixation (31) et la seconde partie de fixation (33) sont agencées de manière à pouvoir être déplacées dans une direction orthogonale à une direction de mouvement relative de la première partie de fixation et de la seconde partie de fixation en raison du mouvement mutuel des structures.

3. Structure d'installation d'un faisceau de fils (1) selon la revendication 1 ou 2, où la première structure (11) est une structure d'assise d'un siège inclinable de véhicule, et la seconde structure (13) est une structure de dossier du siège.
